(19) Europäisches Patentamt
European Patent Office
Office européen des brevets

(11) Publication number: **0 417 514 A2**

# (12) EUROPEAN PATENT APPLICATION

(21) Application number: **90116068.9**

(51) Int. Cl.$^5$: **C08G 64/14**

(22) Date of filing: **22.08.90**

(30) Priority: **14.09.89 US 407085**

(43) Date of publication of application:
**20.03.91 Bulletin 91/12**

(84) Designated Contracting States:
**DE ES FR GB IT NL**

(71) Applicant: **GENERAL ELECTRIC COMPANY**
**1 River Road**
**Schenectady New York 12305(US)**

(72) Inventor: **Campbell, John Robert**
**41 Pepper Hollow**
**Clifton Park, New York 12065(US)**
Inventor: **Shea, Timothy John**
**1085 Keyes Avenue**
**Schenectady, New York 12309(US)**

(74) Representative: **Catherine, Alain**
**General Electric France Service de Propriété Industrielle 18 Rue Horace Vernet**
**F-92136 Issy-Les-Moulineaux Cedex(FR)**

## (54) Method for preparing reactively terminated polycarbonates.

(57) Salicylate-terminated polycarbonates are prepared by the reaction of an organic dihydroxy compound and phosgene in the presence of a salicylate chloroformate, preferably o-carbomethoxyphenyl chloroformate. The reaction is typically conducted interfacially. The salicylate chloroformate may be produced in situ by the reaction of phosgene with a mixture of a salicylic acid ester and a bisphenol such as bisphenol A.

EP 0 417 514 A2

## METHOD FOR PREPARING REACTIVELY TERMINATED POLYCARBONATES

This invention relates to the preparation of polycarbonates having reactive end groups, suitable for use as intermediates in the formation of block copolymers.

It is known that blends of various polymers can be compatibilized by the incorporation therein of a copolymer of the polymers constituting the blend. Thus, for example, blends of polycarbonates and polyphenylene ethers are compatibilized by incorporating therein a polycarbonate-polyphenylene ether copolymer.

Block copolymers of polyphenylene ethers and polycarbonates are disclosed, for example, in U.S. Patents 4,374,233 and 4,377,662. The method for their preparation is essentially the interfacial method for preparing polycarbonates in a mixed aqueous-organic system, with the polyphenylene ether being employed as an additional reactant. Thus, said method may be considered an "endcapping" reaction in which the endcapping agent is the polyphenylene ether. This method is, however, not convenient to practice on a large scale with the preferred organic liquid, methylene chloride, since it forms an insoluble complex with polyphenylene ethers. Other methods for preparing similar block copolymers, such as the one disclosed in copending, commonly owned application Serial No. 140,522, filed January 4, 1988, result in chain scission of the polycarbonate and thus produce block copolymers of low molecular weight, particularly in the polycarbonate blocks.

Thus, there is a continuing need for a convenient method of preparing block copolycarbonates. In particular, methods which may be performed in the melt are of interest. Therefore, there is also a need for reactively terminated polycarbonates adapted for use in such a method. The present invention provides a method for their preparation.

Accordingly, the present invention is a method for preparing a salicylate-terminated polycarbonate which comprises effecting reaction between an organic dihydroxy compound and phosgene in the presence of a salicylate chloroformate of the formula

(I) 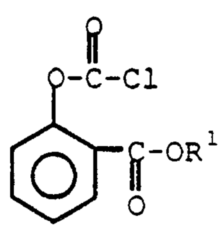

as a chain terminated agent, wherein $R^1$ is a $C_{1-8}$ alkyl or aryl radical.

Other than in their end group structure, the polycarbonates produced by the method of this invention are conventional. They include all polycarbonates, sterically hindered and non-sterically hindered, disclosed in the aforementioned U.S. Patents 4,374,233 and 4,377,662, the disclosures of which are incorporated by reference herein. They may be considered as comprising structural units of the formula

$$\text{(II)} \quad -O-R^2-O-\overset{\overset{\displaystyle O}{\|}}{C}- \quad ,$$

wherein each $R^2$ is independently a divalent organic radical. Preferably, at least about 60% of the total number of $R^2$ values are aromatic radicals, the balance thereof being aliphatic, alicyclic or aromatic radicals.

The $R^2$ values may be different but are usually the same, and may be aliphatic, alicyclic, aromatic or mixed; those which are aliphatic or alicyclic generally contain up to about 8 carbon atoms. Suitable $R^1$ values include ethylene, propylene, trimethylene, tetramethylene, hexamethylene, dodecamethylene, 1,4-(2-butenylene), 1,10-(2-ethyldecylene), 1,3-cyclopentylene, 1,3-cyclohexylene, 1,4-cyclohexylene, m-phenylene, p-phenylene, 4,4′-biphenylene, 2,2-bis(4-phenylene)propane, benzene-1,4-dimethylene (which is a vinylog of the ethylene radical and has similar properties) and similar radicals. Also included are radicals containing non-hydrocarbon moieties. These may be substituents such as chloro, nitro, alkoxy and the like, and also linking radicals such as thio, sulfoxy, sulfone, ester, amide, ether and carbonyl. Most often,

however, all $R^1$ radicals are hydrocarbon radicals.

Preferably at least about 80% of the total number of $R^2$ values, and most desirably all of said $R^2$ values, are aromatic. The aromatic $R^2$ radicals preferably have the formula

(III) $-A^1-Y-A^2$,

wherein each of $A^1$ and $A^2$ is a monocyclic divalent aromatic radical and Y is a bridging radical in which one or two atoms separate $A^1$ from $A^2$. The free valence bonds in formula II are usually in the meta or para positions of $A^1$ and $A^2$ in relation to Y.

The $A^1$ and $A^2$ values may be unsubstituted phenylene or substituted derivatives thereof. Unsubstituted phenylene radicals are preferred. Both $A^1$ and $A^2$ are preferably p-phenylene, although both may be o- or m-phenylene or one o-or m-phenylene and the other p-phenylene.

The bridging radical, Y, is one in which one or two atoms, preferably one, separate $A^1$ from $A^2$. It is most often a hydrocarbon radical and particularly a saturated $C_{1-12}$ aliphatic or alicyclic radical such as methylene, cyclohexyl- methylene, [2.2.1]bicycloheptylmethylene, ethylene, ethylidene, 2,2-propylidene, 1,1-(2,2-dimethylpropylidene), cyclo-hexylidene, cyclopentadecylidene, cyclododecylidene or 2,2-adamantylidene, especially an alkylidene radical. Aryl-substituted radicals are included, as are unsaturated radicals and radicals containing atoms other than carbon and hydrogen; e.g., oxy groups. Substituents may be present on the aliphatic, alicyclic and aromatic portions of the Y group.

Both homopolycarbonates and copolycarbonates may be employed, as well as copolyestercarbonates. Most preferably, they are bisphenol A homo- and copolycarbonates, in which, in at least a portion of the structural units, each of $A^2$ and $A^3$ is p-phenylene and Y is isopropylidene. The bisphenol A homopolycarbonates are often especially preferred by reason of their availability and excellent properties.

The salicylate-terminated polycarbonates prepared by the method of this invention are characterized by the presence in their molecular structure of end groups of the formula

(IV) 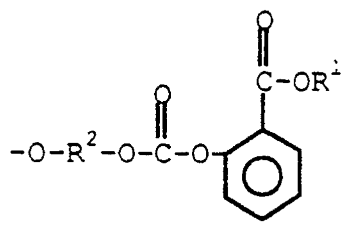 ,

wherein $R^1$ and $R^2$ are as previously defined. Illustrative alkyl radicals for $R^1$ are methyl, ethyl, 1-propyl, 2-propyl, 1-butyl, isobutyl, 2-butyl and 2-hexyl, and illustrative aryl radicals are phenyl, chlorophenyl and tolyl. The $C_{1-4}$ primary alkyl radicals are preferred, with methyl being most preferred.

Said polycarbonates have the same general molecular structure as those prepared by a transesterification reaction between a bisphenol and a salicylate carbonate, as disclosed in U.S. Patent 4,323,668. According to the present invention, however, they are prepared by the reaction of an organic dihydroxy compound, particularly a dihydroxyaromatic compound such as a bisphenol, with phosgene in the presence of a salicylate chloroformate of formula I.

Preparation of the salicylate-terminated polycarbonate by phosgenation according to the method of the invention may be achieved under conventional interfacial conditions, employing as an organic solvent a substantially water-immiscible organic liquid such as methylene chloride. Said reaction occurs in an alkaline medium, in the presence of a tertiary amine such as triethylamine as catalyst. It may be conducted in one step, employing phosgene in combination with the dihydroxy compound and the chainstopper. It may also be conducted in two steps, first preparing a bischloroformate oligomer composition by reaction of the bisphenol with phosgene under alkaline conditions, and subsequently adding the catalyst and converting said bischloroformate composition to a polycarbonate, as described, for example, in U.S. Patents 4,737,573 and 4,743,676, the disclosures of which are incorporated by reference herein.

The proportion of chainstopper is selected so as to produce a polycarbonate of the desired molecular weight, and can be readily determined on that basis by routine experimentation. About 1-10 and preferably about 2-5 mole percent, based on bisphenol, is generally employed.

Prior to the present invention, molecular weight control of polycarbonates prepared by phosgenation was typically effected by employing a monohydroxyaromatic compound such as phenol as a chainstopper. Salicylic acid esters such as methyl salicylate, although also monohydroxyaromatic compounds, are generally ineffective as chainstoppers since they are not reactive enough to function satisfactorily. However, the present invention includes in situ conversion of a salicylic acid ester to the corresponding chloroformate

by phosgenating an alkaline mixture of the bisphenol and salicylate ester and subsequently adding the catalyst and proceeding with polycarbonate formation.

The weight average molecular weight of the salicylate-terminated polycarbonate is generally at least about 25,000 and preferably at least about 40,000. There is no real upper limit for molecular weight, but values above about 200,000 are not readily available.

The method of this invention is illustrated by the following examples. All polycarbonate molecular weights are weight average and were determined by gel permeation chromatography relative to polystyrene.

## Example 1

A 500-ml. Morton flask equipped with a stirrer, a nitrogen-blanketed condenser, a phosgene inlet, a caustic addition funnel and a pH probe was charged in a nitrogen atmosphere with 29.6 grams of bisphenol A, 70 ml. of methylene chloride, 55 ml. of water, 2 ml. of a 5% aqueous solution of triethylamine and 975 mg. of o-carbomethoxyphenyl chloroformate. The pH of the mixture was increased to 11 by the addition of 50% aqueous sodium hydroxide solution, and phosgene was added at 0.8 gram per minute, with stirring, while the pH was maintained in the range of 10.5-12 by the addition of additional sodium hydroxide solution. After 25 minutes, addition of phosgene was stopped and the pH was adjusted to 9.0. The desired salicylate-terminated polycarbonate was diluted with methylene chloride and the organic layer was removed, washed with dilute aqueous hydrochloric acid and extensively with water, precipitated by pouring into methanol, filtered and dried. It had a molecular weight of 41,000.

## Example 2

The procedure of Example 1 was repeated, except that no triethylamine was added initially. Phosgenation was conducted for 20 minutes in the pH range 11.5-12.5, after which the triethylamine was added and polymerization was conducted at a pH in the range of 11-12 for 8 minutes. A similar product, having a molecular weight of 50,000, was obtained.

The salicylate-terminated polycarbonates prepared by the method of this invention may be employed as intermediates in the preparation of block polyphenylene ether-polycarbonates, by reaction with a polyphenylene ether in the presence of a polycarbonate-forming transesterification catalyst. This method for the preparation of block copolymers is disclosed and claimed in copending, commonly owned application Serial No. [RD-18050]. Suitable catalysts include all those suitable for use in the preparation of polycarbonates by transesterification; for example, from bisphenols and diaryl carbonates or from bisphenol diesters and dialkyl carbonates. Numerous catalysts of this type are disclosed in the prior art. Reference is made, for example, to the aforementioned U.S. Patent 4,323,668 and the following additional patents, the disclosures of which are also incorporated by reference herein: 3,153,308, 3,442,854, 4,345,062, 4,452,968.

Illustrative catalysts are inorganic and organic bases such as sodium hydroxide, sodium hydride, sodium methoxide, sodium borohydride, lithium aluminum hydride, the disodium salt of bisphenol A and 1,2,2,6,6-pentamethyl-pyridine; tetraarylborates such as sodium tetraphenylborate, tetramethylammonium tetraphenylborate and tetra-n-butylammonium tetraphenylborate; and titanates and zirconates such as titanium bis(acetylacetonate), tetraisopropyl titanate and tetraoctyl titanate and the corresponding zirconates. The tetraarylborates, particularly tetraalkylammonium tetraphenylborates, are generally preferred.

The reaction is effected by heating the polyphenylene ether, polycarbonate and catalyst at a temperature usually within the range of about 200-300°C. Either solution or melt reaction conditions may be employed. Solution reactions are preferably conducted using a high boiling solvent such as o-dichlorobenzene or 1,2,4-trichlorobenzene, but may also take place in lower boiling solvents under pressure. Melt reactions may be conducted in conventional equipment therefore, illustrated by Helicone mixers and extruders.

The proportions of reagents used are not critical and will depend largely on the proportions of polyphenylene ether and polycarbonate moieties desired in the copolymer. For the most part, a weight ratio of polyphenylene ether to polycarbonate in the range of about 0.5-2.0:1 is suitable. The proportion of catalyst is generally about 0.1-2.0% by weight based on polycarbonate.

It is believed that copolymer formation occurs according to the present invention by nucleophilic substitution of the polyphenylene ether for the salicylate end group on the polycarbonate. This reaction is facilitated by the high activity of the salicylate anion as a leaving group. The product thus obtained

generally also contains residual homopolymeric polycarbonate and polyphenylene ether.

If the reaction has been conducted in solution, the polymeric product may be isolated by conventional operations, typically including precipitation with a non-solvent such as methanol. Some separation of homopolymer reactants from copolymer may then be achieved by treatment with methylene chloride. Homopolycarbonate, being solutle in methylene chloride, will remain in solution while homopolymeric polyphenylene ether will be precipitated as the methylene chloride complex, accompanied by at least a portion of the copolymer product.

Since any polycarbonate present in the methylene chloride complex may be assumed to be copolymer, the proportion of copolymer may be determined from the results of proton nuclear magnetic resonance analysis. The methylene chloride sclution is also often found to contain polyphenylene ether, probably as copolymer in which the polycarbonate portion predominates. When this is the case, the polymeric contents of the solution may be similarly analyzed.

The preparation of block copolymers from salicylate-terminated polycarbonates is illustrated by the following examples.

Examples 3-4

Mixtures of 5 grams of a poly(2,6-dimethyl-1,4-phenylene ether) having a number average molecular weight of about 20,000, 5 grams of methyl salicylate-terminated bisphenol A polycarbonates similar (except in molecular weight) to the product of Example 1, 20 mg. of tetra-n-butylammonium tetraphenylborate and 75 ml. of 1,2,4-trichlorobenzene were heated in a nitrogen atmosphere for 1 hour at 200° C, with stirring. They were then cooled and the polymers were isolated by pouring into methanol followed by filtration.

Dried 5-gram samples of the polymeric products were dissolved in 100 ml. of methylene chloride and the solutions were cooled in a refrigerator for 4 hours, whereupon the polyphenylene ether-methylene chloride complexes precipitated. They were removed bY filtration and washed with methylene chloride; the filtrates and washings were concentrated to dryness. Both the methylene chloride-soluble and insoluble fractions were analyzed by proton nuclear magnetic resonance to ascertain the proportions of polycarbonate and polyphenylene ether therein. The weight average molecular weights of the methylene chloride-soluble fractions were also determined.

The results are given in Table I, in comparison with two controls. In Control A, a simple blend of equal weights of polyphenylene ether and a phenol-chainstopped polycarbonate was similarly treated with methylene chloride. In Control B, the methyl salicylate-terminated polycarbonate of Example 3 was replaced by a phenol-chainstopped polycarbonate.

TABLE I

| | Example | | Control | |
|---|---|---|---|---|
| | 3 | 4 | A | B |
| Chainstopped polycarbonate, Mw | 30,000 | 65,200 | 29,000 | 29,000 |
| Soluble fraction: | | | | |
| Polyphenylene ether, % | 20 | 40 | 0 | 13 |
| Mw | 42,000 | 48,000 | -- | 17,000 |
| Insoluble fraction: Polycarbonate, % | 34 | 27 | 0 | 19 |

The results in Table I show a substantial proportion of polycarbonate in the insoluble fraction and polyphenylene ether in the soluble fraction in Examples 3-4, and also a substantial increase in molecular weight of the soluble fraction as compared to the polycarbonate used as reactant. This is strong evidence of the formation of the desired block copolymers. On the other hand, no copolymer formation was noted in Control A and a substantial amount of chain scission took place in Control B.

Example 5

A mixture of 120 grams of the polyphenylene ether of Example 3, 150 grams of a salicylate-terminated polycarbonate similar, except in molecular weight, to the polycarbonate employed in that example and 3 grams of tetra-n-butylammonium tetraphenylborate was extruded on a twin-screw extruder at a screw speed of 400 rpm. and temperatures in the range of 120-260° C. Workup and analysis were performed as in Example 3, except that molecular weights of both the soluble and insoluble fractions were determined.

Example 6

A small Helicone reactor was charged with 20 grams each of the polyphenylene ether of Example 3 and a salicylate-terminated polycarbonate similar, except in molecular weight, to the polycarbonate employed in that example and 80 mg. of tetra-n-butylammonium tetraphenylborate. The mixture was heated under nitrogen for 18 minutes at 293° C. It was then worked up and analyzed as described in Example 5. Comparison was made with a control in which a phenol-chainstopped polycarbonate was employed.

The results of Examples 5-6 are given in Table II.

TABLE II

| | Example | | Control |
|---|---|---|---|
| | 5 | 6 | |
| Chainstopped polycarbonate, Mw | 60,000 | 32,000 | 29,000 |
| Reactor: | | | |
| Identity<br>Residence time, min. | Extruder<br>1.5 | Helicone<br>18 | Helicone<br>18 |
| Soluble fraction: | | | |
| Polyphenylene ether, %<br>Mw | 17<br>19,400 | 15<br>16,100 | 21<br>15,100 |
| Insoluble fraction: | | | |
| Polycarbonate, %<br>Mw | 20<br>23,300 | 20<br>34,000 | 12<br>16,200 |

It is apparent that both fractions in Example 6 contained polymers of higher molecular weight than those of the control, indicating a lesser degree of chain scission. The results of Example 5 show that substantial levels of copolymer are formed even with the shorter residence times characteristic of extrusion operations.

## Claims

1. A method for preparing a salicylate-terminated polycarbonate which comprises effecting reaction between an organic dihydroxy compound and phosgene in the presence of a salicylate chloroformate of the formula

(I) 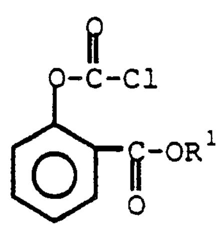

as a chain terminated agent, wherein $R^1$ is a $C_{1-8}$ alkyl or aryl radical.

2. A method according to claim 1 wherein the polycarbonate is a bisphenol A polycarbonate.
3. A method according to claim 2 wherein $R^1$ is methyl.
4. A method according to claim 1 wherein the salicylate chloroformate is produced in situ by phosgenating an alkaline mixture of the organic dihydroxy compound and a salicylic acid ester.
5. A method according to claim 4 wherein the polycarbonate is a bisphenol A polycarbonate.
6. A method according to claim 5 wherein the salicylic acid ester is methyl salicylate.
7. A method according to claim 1 wherein the reaction is conducted interfacially in an alkaline medium, employing a substantially water-immiscible organic liquid and a tertiary amine as catalyst.
8. A method according to claim 7 wherein the organic liquid is methylene chloride.
9. A method according to claim 7 wherein the tertiary amine is triethylamine.
10. A method according to claim 7 wherein the polycarbonate is a bisphenol A polycarbonate.
11. A method according to claim 10 wherein $R^1$ is methyl.